# EUROPEAN PATENT APPLICATION

(11) **EP 4 019 747 A1**
(43) Date of publication of application: **29.06.2022**
(21) Application number: 21213932.3
(22) Date of filing: 13.12.2021
(51) Int. Cl.: F01N 1/08, F02M 35/12, F02B 63/04, F02B 77/13

(54) **NOISE REDUCTION APPARATUS AND GENERATOR ASSEMBLY**

(30) Priority: 24.12.2020 CN 202011551575
(71) Applicant: Huawei Digital Power Technologies Co., Ltd., Shenzhen, Guangdong 518043 (CN)
(72) Inventor: WANG, Zheng, Shenzhen, 518129 (CN); LI, Yong, Shenzhen, 518129 (CN); YANG, Xiaohui, Shenzhen, 518129 (CN)
(74) Representative: Isarpatent

(57) **Abstract**

This application relates to the field of power technologies, and in particular, to a noise reduction apparatus and a generator assembly. The noise reduction apparatus includes a housing, a first baffle component, and a second baffle component. The housing includes a first installation room configured to install diesel generating equipment, and the first installation room has a top plate, a bottom plate, and a first side plate and a second side plate that are oppositely disposed. An air intake vent is disposed on the first side plate, and an air exhaust vent is disposed on the second side plate. A first serpentine channel is formed in the first baffle component, and one end of the first serpentine channel is connected to the air intake vent. A second serpentine channel is formed in the second baffle component, and one end of the second serpentine channel is connected to the air exhaust vent. The noise reduction apparatus in this application can effectively absorb noise generated by the diesel generating equipment, to reduce environmental noise pollution caused by the diesel generating equipment during operation.

## Description

### TECHNICAL FIELD

This application relates to the field of power technologies, and in particular, to a noise reduction apparatus and a generator assembly.

### BACKGROUND

Diesel generating equipment is a power supply device that uses a diesel engine as a prime mover to drive a generator to produce electricity. The diesel generating equipment is a generating apparatus with fast start-up, convenient operation and maintenance, low investment, and relatively strong environment adaptability. Currently, the diesel generating equipment may be widely applied to modern civil buildings, to improve reliability of electric equipment such as a life pump, an elevator, a fire pump, and a spray pump in modern civil equipment. In addition, the diesel generating equipment may also be applied to a large ship.

However, due to a structural feature of a diesel generator set, the diesel generating equipment generates relatively large noise during operation. This is likely to cause environmental noise pollution. Therefore, how to alleviate noise pollution caused by the diesel generating equipment becomes an urgent problem to be resolved.

### SUMMARY

This application provides a noise reduction apparatus and a generator assembly, to alleviate noise pollution of diesel generating equipment.

According to a first aspect, this application provides a noise reduction apparatus. The noise reduction apparatus includes a housing, a first baffle component, and a second baffle component. The housing includes a first installation room configured to install diesel generating equipment, and the first installation room has a top plate, a bottom plate, and a first side plate and a second side plate that are oppositely disposed. An air intake vent is disposed on the first side plate, and an air exhaust vent is disposed on the second side plate. A first serpentine channel is formed in the first baffle component, and one end of the first serpentine channel is connected to the air intake vent. A second serpentine channel is formed in the second baffle component, and one end of the second serpentine channel is connected to the air exhaust vent. Because the first serpentine channel and the second serpentine channel are disposed, when a sound signal in the first installation room needs to be transmitted to an external environment of the first installation room, the sound signal can reach the air intake vent and the air exhaust vent only after passing through the first serpentine channel and the second serpentine channel. In a process of passing through the first serpentine channel and the second serpentine channel, the sound signal is reflected for a plurality of times, and in a process of the plurality of times of reflection, strength of the sound signal continuously decreases, so that a relatively weak sound signal is transmitted to the external environment. Therefore, when the diesel generating equipment operates in the first installation room, most sound signals (noise) generated by the diesel generating equipment are absorbed in the first installation room, thereby reducing noise externally transmitted by the diesel generating equipment.

In a specific solution, the first baffle component may include a first plate group and a second plate group. The first plate group may include a plurality of first plate bodies arranged in a first direction, the second plate group may include a plurality of second plate bodies arranged in the first direction, and the first plate bodies and the second plate bodies are disposed in a staggered manner, so that the first plate group and the second plate group are combined into an insertion finger structure, and the insertion finger structure constitutes the first serpentine channel. The first serpentine channel is disposed, so that when sound signals generated by the diesel generating equipment need to be transmitted through the air intake vent, the sound signals can be blocked by the plurality of first plate bodies and the plurality of second plate bodies, and some of the sound signals can be reflected back to the first installation room, to increase a quantity of times of reflection of the sound signal in the first installation room.

It should be noted that a quantity of first plate bodies may be the same as a quantity of second plate bodies, or a quantity of first plate bodies may be different from a quantity of second plate bodies. Specifically, two, three, or more first plate bodies may be disposed, and two, three, or more second plate bodies may be disposed.

In a specific solution, the second baffle component includes a third plate group and a fourth plate group. The third plate group includes a plurality of third plate bodies arranged in a second direction, the fourth plate group includes a plurality of fourth plate bodies arranged in the second direction, and the third plate bodies and the fourth plate bodies are disposed in a staggered manner, so that the third plate group and the fourth plate group are combined into an insertion finger structure, and the insertion finger structure constitutes the second serpentine channel. The second serpentine channel is disposed, so that when sound signals generated by the diesel generating equipment need to be transmitted through the air exhaust vent, the sound signals can be blocked by the plurality of third plate bodies and the plurality of fourth plate bodies, and some of the sound signals can be reflected back to the first installation room, to increase a quantity of times of reflection of the sound signal in the first installation room.

It should be noted that a quantity of third plate bodies may be the same as a quantity of fourth plate bodies, or a quantity of third plate bodies may be different from a quantity of fourth plate bodies. Specifically, two, three, or more third plate bodies may be disposed, and two, three, or more fourth plate bodies may be disposed.

In a specific solution, the first direction is perpendicular to the first side plate. In a direction from the bottom plate to the top plate of the first installation room, the air intake vent is disposed in a specified area in a direction that is of the first side plate and that is close to the top plate. Each first plate body in the first plate group is parallel to the first side plate, and each first plate body is connected to the top plate. The second plate group further includes a second connection plate, the second connection plate is parallel to the top plate, each second plate body is parallel to the first side plate and is located on a side that is of the second connection plate and that faces the top plate, the second connection plate is connected to the first side plate, and each second plate body is connected to the second connection plate. Therefore, the first serpentine channel is formed between the first plate body, the second plate body, the top plate, and the second connection plate. Correspondingly, the second direction is perpendicular to the first side plate. In the direction from the bottom plate to the top plate of the first installation room, the air exhaust vent is located in a specified area in a direction that is of the second side plate and that is close to the top plate. Each third plate body in the third plate group is parallel to the second side plate, and each third plate body is connected to the top plate. The fourth plate group further includes a fourth connection plate, the fourth connection plate is parallel to the top plate, each fourth plate body is parallel to the second side plate and is located on a side that is of the fourth connection plate and that faces the top plate, the fourth connection plate is connected to the second side plate, and each fourth plate body is connected to the fourth connection plate. Therefore, the second serpentine channel is formed between the fourth connection plate, the third plate body, the fourth plate body, and the top plate.

In a specific solution, the first direction is perpendicular to the first side plate. In a direction from the bottom plate to the top plate of the first installation room, the air intake vent is disposed in a specified area in a direction that is of the first side plate and that is close to the top plate. Each first plate body in the first plate group is parallel to the first side plate, and each first plate body is connected to the top plate. The second plate group further includes a second connection plate, the second connection plate is parallel to the top plate, each second plate body is parallel to the first side plate and is located on a side that is of the second connection plate and that faces the top plate, the second connection plate is connected to the first side plate, and each second plate body is connected to the second connection plate. Therefore, the first serpentine channel is formed between the first plate body, the second plate body, the top plate, and the second connection plate. Correspondingly, the second direction is perpendicular to the first side plate. In the direction from the bottom plate to the top plate of the first installation room, the air exhaust vent is disposed in a specified area in a direction that is of the second side plate and that is close to the bottom plate. Each fourth plate body in the fourth plate group is parallel to the second side plate, and each fourth plate body is connected to the bottom plate. The third plate group further includes a third connection plate, the third connection plate is parallel to the bottom plate, each third plate body is parallel to the second side plate and is located on a side that is of the third connection plate and that faces the bottom plate, the third connection plate is connected to the second side plate, and each third plate body is connected to the third connection plate. Therefore, the second serpentine channel is formed between the third connection plate, the third plate body, the fourth plate body, and the bottom plate.

In a specific solution, the first direction is perpendicular to the first side plate. In a direction from the bottom plate to the top plate of the first installation room, the air intake vent is disposed in a specified area in a direction that is of the first side plate and that is close to the top plate. Each first plate body in the first plate group is parallel to the first side plate, and each first plate body is connected to the top plate. The second plate group further includes a second connection plate, the second connection plate is parallel to the top plate, each second plate body is parallel to the first side plate and is located on a side that is of the second connection plate and that faces the top plate, the second connection plate is connected to the first side plate, and each second plate body is connected to the second connection plate. Therefore, the first serpentine channel is formed between the first plate body, the second plate body, the top plate, and the second connection plate. Correspondingly, the second direction is perpendicular to the first side plate. In the direction from the bottom plate to the top plate of the first installation room, the air exhaust vent is disposed in a middle area of the second side plate. The third plate group further includes a third connection plate, the third connection plate is parallel to the bottom plate, each third plate body is parallel to the second side plate and is located on a side that is of the third connection plate and that faces the bottom plate, the third connection plate is connected to the second side plate, and each third plate body is connected to the third connection plate. The fourth plate group further includes a fourth connection plate, the fourth connection plate is parallel to the top plate, each fourth plate body is parallel to the second side plate and is located on a side that is of the fourth connection plate and that faces the third connection plate, the fourth connection plate is connected to the second side plate, and each fourth plate body is connected to the fourth connection plate. Therefore, the second serpentine channel is formed between the third connection plate, the third plate body, the fourth connection plate, and the fourth plate body.

In a specific solution, the first direction is perpendicular to the first side plate. In a direction from the bottom plate to the top plate of the first installation room, the air intake vent may be disposed in a specified area in a direction that is of the first side plate and that is close to the bottom plate. Each second plate body in the second plate group is parallel to the first side plate, and each second plate body is connected to the bottom plate. The first plate group further includes a first connection plate, the first connection plate is parallel to the bottom plate, each first plate body is parallel to the first side plate and is located on a side that is of the first connection plate and that faces the bottom plate, the first connection plate is connected to the first side plate, and each first plate body is connected to the first connection plate. Therefore, the first serpentine channel is formed between the first connection plate, the first plate body, the second plate body, and the bottom plate. Correspondingly, the second direction is perpendicular to the first side plate. In the direction from the bottom plate to the top plate of the first installation room, the air exhaust vent may be located in a specified area in a direction that is of the second side plate and that is close to the top plate. Each third plate body in the third plate group is parallel to the second side plate, and each third plate body is connected to the top plate of the first installation room. The fourth plate group further includes a fourth connection plate, the fourth connection plate is parallel to the top plate, each fourth plate body is parallel to the second side plate and is located on a side that is of the fourth connection plate and that faces the top plate, the fourth connection plate is connected to the second side plate, and each fourth plate body is connected to the fourth connection plate. Therefore, the second serpentine channel is formed between the fourth connection plate, the third plate body, the fourth plate body, and the top plate.

In a specific solution, the first direction is perpendicular to the first side plate. In a direction from the bottom plate to the top plate of the first installation room, the air intake vent may be disposed in a specified area in a direction that is of the first side plate and that is close to the bottom plate. Each second plate body in the second plate group is parallel to the first side plate, and each second plate body is connected to the bottom plate. The first plate group further includes a first connection plate, the first connection plate is parallel to the bottom plate, each first plate body is parallel to the first side plate and is located on a side that is of the first connection plate and that faces the bottom plate, the first connection plate is connected to the first side plate, and each first plate body is connected to the first connection plate. Therefore, the first serpentine channel is formed between the first connection plate, the first plate body, the second plate body, and the bottom plate. Correspondingly, the second direction is perpendicular to the first side plate. In the direction from the bottom plate to the top plate of the first installation room, the air exhaust vent is disposed in a specified area in a direction that is of the second side plate and that is close to the bottom plate. Each fourth plate body in the fourth plate group is parallel to the second side plate, and each fourth plate body is connected to the bottom plate. The third plate group further includes a third connection plate, the third connection plate is parallel to the bottom plate, each third plate body is parallel to the second side plate and is located on a side that is of the third connection plate and that faces the bottom plate, the third connection plate is connected to the second side plate, and each third plate body is connected to the third connection plate. Therefore, the second serpentine channel is formed between the third connection plate, the third plate body, the fourth plate body, and the bottom plate.

In a specific solution, the first direction is perpendicular to the first side plate. In a direction from the bottom plate to the top plate of the first installation room, the air intake vent may be disposed in a specified area in a direction that is of the first side plate and that is close to the bottom plate. Each second plate body in the second plate group is parallel to the first side plate, and each second plate body is connected to the bottom plate. The first plate group further includes a first connection plate, the first connection plate is parallel to the bottom plate, each first plate body is parallel to the first side plate and is located on a side that is of the first connection plate and that faces the bottom plate, the first connection plate is connected to the first side plate, and each first plate body is connected to the first connection plate. Therefore, the first serpentine channel is formed between the first connection plate, the first plate body, the second plate body, and the bottom plate. Correspondingly, the second direction is perpendicular to the first side plate. In the direction from the bottom plate to the top plate of the first installation room, the air exhaust vent is disposed in a middle area of the second side plate. The third plate group further includes a third connection plate, the third connection plate is parallel to the bottom plate, each third plate body is parallel to the second side plate and is located on a side that is of the third connection plate and that faces the bottom plate, the third connection plate is connected to the second side plate, and each third plate body is connected to the third connection plate. The fourth plate group further includes a fourth connection plate, the fourth connection plate is parallel to the top plate, each fourth plate body is parallel to the second side plate and is located on a side that is of the fourth connection plate and that faces the third connection plate, the fourth connection plate is connected to the second side plate, and each fourth plate body is connected to the fourth connection plate. Therefore, the second serpentine channel is formed between the third connection plate, the third plate body, the fourth connection plate, and the fourth plate body.

In a specific solution, the first direction is perpendicular to the first side plate. In a direction from the bottom plate to the top plate of the first installation room, the air intake vent is disposed in a middle area of the first side plate. The first plate group further includes a first connection plate, the first connection plate is parallel to the bottom plate, each first plate body is parallel to the first side plate and is located on a side that is of the first connection plate and that faces the bottom plate, the first connection plate is connected to the first side plate, and each first plate body is connected to the first connection plate. The second plate group further includes a second connection plate, the second connection plate is parallel to the top plate, each second plate body is parallel to the first side plate and is located on a side that is of the second connection plate and that faces the first connection plate, the second connection plate is connected to the first side plate, and each second plate body is connected to the second connection plate. Therefore, the first serpentine channel is formed between the first connection plate, the second connection plate, the first plate body, and the second plate body. Correspondingly, the second direction is perpendicular to the first side plate. In the direction from the bottom plate to the top plate of the first installation room, when the air exhaust vent is located in a specified area in a direction that is of the second side plate and that is close to the top plate, each third plate body in the third plate group is parallel to the second side plate, and each third plate body is connected to the top plate of the first installation room. The fourth plate group further includes a fourth connection plate, the fourth connection plate is parallel to the top plate, each fourth plate body is parallel to the second side plate and is located on a side that is of the fourth connection plate and that faces the top plate, the fourth connection plate is connected to the second side plate, and each fourth plate body is connected to the fourth connection plate. Therefore, the second serpentine channel is formed between the fourth connection plate, the third plate body, the fourth plate body, and the top plate.

In a specific solution, the first direction is perpendicular to the first side plate. In a direction from the bottom plate to the top plate of the first installation room, the air intake vent is disposed in a middle area of the first side plate. The first plate group further includes a first connection plate, the first connection plate is parallel to the bottom plate, each first plate body is parallel to the first side plate and is located on a side that is of the first connection plate and that faces the bottom plate, the first connection plate is connected to the first side plate, and each first plate body is connected to the first connection plate. The second plate group further includes a second connection plate, the second connection plate is parallel to the top plate, each second plate body is parallel to the first side plate and is located on a side that is of the second connection plate and that faces the first connection plate, the second connection plate is connected to the first side plate, and each second plate body is connected to the second connection plate. Therefore, the first serpentine channel is formed between the first connection plate, the second connection plate, the first plate body, and the second plate body. Correspondingly, the second direction is perpendicular to the first side plate. In the direction from the bottom plate to the top plate of the first installation room, the air exhaust vent is disposed in a specified area in a direction that is of the second side plate and that is close to the bottom plate. Each fourth plate body in the fourth plate group is parallel to the second side plate, and each fourth plate body is connected to the bottom plate. The third plate group further includes a third connection plate, the third connection plate is parallel to the bottom plate, each third plate body is parallel to the second side plate and is located on a side that is of the third connection plate and that faces the bottom plate, the third connection plate is connected to the second side plate, and each third plate body is connected to the third connection plate. Therefore, the second serpentine channel is formed between the third connection plate, the third plate body, the fourth plate body, and the bottom plate.

In a specific solution, the first direction is perpendicular to the first side plate. In a direction from the bottom plate to the top plate of the first installation room, the air intake vent is disposed in a middle area of the first side plate. The first plate group further includes a first connection plate, the first connection plate is parallel to the bottom plate, each first plate body is parallel to the first side plate and is located on a side that is of the first connection plate and that faces the bottom plate, the first connection plate is connected to the first side plate, and each first plate body is connected to the first connection plate. The second plate group further includes a second connection plate, the second connection plate is parallel to the top plate, each second plate body is parallel to the first side plate and is located on a side that is of the second connection plate and that faces the first connection plate, the second connection plate is connected to the first side plate, and each second plate body is connected to the second connection plate. Therefore, the first serpentine channel is formed between the first connection plate, the second connection plate, the first plate body, and the second plate body. Correspondingly, the second direction is perpendicular to the first side plate. In the direction from the bottom plate to the top plate of the first installation room, the air exhaust vent is disposed in a middle area of the second side plate. The third plate group further includes a third connection plate, the third connection plate is parallel to the bottom plate, each third plate body is parallel to the second side plate and is located on a side that is of the third connection plate and that faces the bottom plate, the third connection plate is connected to the second side plate, and each third plate body is connected to the third connection plate. The fourth plate group further includes a fourth connection plate, the fourth connection plate is parallel to the top plate, each fourth plate body is parallel to the second side plate and is located on a side that is of the fourth connection plate and that faces the third connection plate, the fourth connection plate is connected to the second side plate, and each fourth plate body is connected to the fourth connection plate. Therefore, the second serpentine channel is formed between the third connection plate, the third plate body, the fourth connection plate, and the fourth plate body.

In the foregoing solutions, because a sound signal is reflected for a plurality of times before reaching the air intake vent and the air exhaust vent, strength of the sound signal continuously decreases, to reduce noise transmitted by the diesel generating equipment to the external environment.

It should be noted that a quantity of third plate bodies may be the same as a quantity of fourth plate bodies, or a quantity of third plate bodies may be different from a quantity of fourth plate bodies. Specifically, two, three, or more third plate bodies may be disposed, and two, three, or more fourth plate bodies may be disposed.

In a specific solution, the housing may further include a second installation room, and the second installation room is disposed side by side with the first installation room to form the housing. The second installation room is connected to the air exhaust vent of the first installation room, and auxiliary equipment that assists the diesel generating equipment may be installed in the second installation room.

It should be noted that the housing may be a container. Specifically, the housing may further include two third side plates connected to the first side plate and the second side plate; and a sound absorption layer is disposed on each of the first side plate, the second side plate, the third side plate, the top plate, and the bottom plate, or a sound absorption layer may be disposed on each of one or several of the first side plate, the second side plate, the third side plate, the top plate, and the bottom plate. In addition, a sound absorption layer may also be disposed on each of the first baffle component and the second baffle component.

According to a second aspect, this application further provides a generator assembly. The generator assembly includes diesel generating equipment, a cooling device, and the noise reduction apparatus in the foregoing solutions. The cooling device is connected to a liquid cooler of the diesel generating equipment and is configured to cool and dissipate heat for the diesel generating equipment. The diesel generating equipment is installed in the first installation room. The diesel generating equipment is disposed in the first installation room, so that noise generated by the diesel generating equipment during operation can be reduced, thereby alleviating environmental noise pollution.

In a specific solution, the cooling device may include a water tank, a water outlet pipe, and a water return pipe. One end of the water outlet pipe is connected to a water outlet port of the water tank, and the other end of the water outlet pipe is configured to be connected to a water inlet port of the liquid cooler of the diesel generating equipment. One end of the water return pipe is connected to a water return port of the water tank, and the other end of the water return pipe is connected to a water outlet port of the liquid cooler of the diesel generating equipment. Water in the water tank may enter the liquid cooler of the diesel generating equipment through the water outlet pipe, and flow back to the water tank through the water return pipe, so that the diesel generating equipment can operate at a specified temperature.

In the foregoing solution, when the noise reduction apparatus includes a second installation room, the water tank may be disposed in the first installation room or the second installation room in the housing, and a specific disposition location of the water tank needs to be adjusted based on an actual use case.

In a specific solution, the generator assembly further includes a heat dissipation component, and the heat dissipation component is disposed in the second installation room. Specifically, the heat dissipation component may include a heat sink and a heat dissipation blower. The heat sink is connected to the water return pipe and the water tank, so that water in the water return pipe returns to the water tank after passing through the heat sink. The heat dissipation blower is configured to improve a heat dissipation speed of water passing through the heat sink.

In a specific solution, the diesel generating equipment may include a diesel engine and a first generator. One output shaft of the diesel engine is connected to the first generator, and the other output shaft of the diesel engine may extend to the second installation room to be connected to the heat dissipation blower, to drive the heat dissipation blower to operate.

It should be noted that the heat dissipation blower may be in a plurality of forms. For example, the heat dissipation blower may be a heat dissipation fan. In this case, the heat dissipation fan may be installed on a side that is of the heat sink and that faces the first installation room, and a manner of driving the heat dissipation fan to operate may be as follows: A motor is installed on the heat dissipation fan, the other output shaft of the diesel engine is connected to a second generator, and the second generator provides power for the motor. The heat dissipation blower may be alternatively a centrifugal blower. In this case, the centrifugal blower may be disposed on a side close to the first installation room, an air intake vent of the centrifugal blower is connected to the air exhaust vent of the first installation room, and another output shaft of the diesel engine is penetrated through the air exhaust vent to drive the centrifugal blower. This disposition manner can facilitate cleaning of the centrifugal blower.

In a specific solution, the diesel generating equipment further includes a vibration damping component, the vibration damping component is disposed on the bottom plate of the first installation room, and both the diesel engine and the first generator are disposed on the vibration damping component. Specifically, the vibration damping component may include an installation plate and a plurality of springs, and the plurality of springs may be evenly distributed between the installation plate and the bottom plate of the first installation room, to damp vibration generated by the diesel engine during operation.

In a specific solution, the diesel engine further includes an air intake vent and a smoke exhaust pipe, the air intake vent is configured to provide oxygen for the diesel engine, and the smoke exhaust pipe is configured to exhaust smoke generated by the diesel engine. In addition, an intake silencer is disposed in the smoke exhaust pipe, to reduce noise exhausted through the exhaust pipe.

### BRIEF DESCRIPTION OF DRAWINGS

FIG. 1 is a schematic diagram of a structure of a diesel generator assembly in the conventional technology;
FIG. 2 is a schematic diagram of a structure of a noise reduction apparatus according to an embodiment of this application;
FIG. 3 is a schematic diagram of a structure of another noise reduction apparatus according to an embodiment of this application;
FIG. 4 is a schematic diagram of a structure of still another noise reduction apparatus according to an embodiment of this application;
FIG. 5 is a schematic diagram of a structure of yet another noise reduction apparatus according to an embodiment of this application;
FIG. 6 is a schematic diagram of a structure of still yet another noise reduction apparatus according to an embodiment of this application;
FIG. 7 is a schematic diagram of a structure of a further noise reduction apparatus according to an embodiment of this application;
FIG. 8 is a schematic diagram of a structure of a still further noise reduction apparatus according to an embodiment of this application;
FIG. 9 is a schematic diagram of a structure of a yet further noise reduction apparatus according to an embodiment of this application;
FIG. 10 is a schematic diagram of a structure of a still yet further noise reduction apparatus according to an embodiment of this application;
FIG. 11 is a schematic diagram of a structure of a generator assembly according to an embodiment of this application;
FIG. 12 is a schematic diagram of a structure of another generator assembly according to an embodiment of this application; and
FIG. 13 is a schematic diagram of a structure of still another generator assembly according to an embodiment of this application.

Reference numerals: 1-diesel engine; 2-sound absorption structure; 10-housing; 11-first installation room; 110-first side plate; 111-second side plate; 112-air intake vent; 113-air exhaust vent; 12-second installation room; 20-first baffle component; 210-first plate body; 220-second plate body; 230-second connection plate; 240-first connection plate; 30-second baffle component; 310-third plate body; 320-fourth plate body; 330-fourth connection plate; 340-third connection plate; 40-diesel generating equipment; 41-diesel engine; 42-first engine; 43-second engine; 44-installation plate; 45-spring; 50-cooling device; 51-water tank; 52-water outlet pipe; 53-water return pipe; 60-heat dissipation component; 61-heat sink; 62-heat dissipation blower; 63-second generator; 70-air intake vent; 80-smoke exhaust pipe; and 81 -intake silencer.

### DESCRIPTION OF EMBODIMENTS

To make objectives, technical solutions, and advantages of this application more clearly, the following further describes this application in detail with reference to the accompanying drawings.

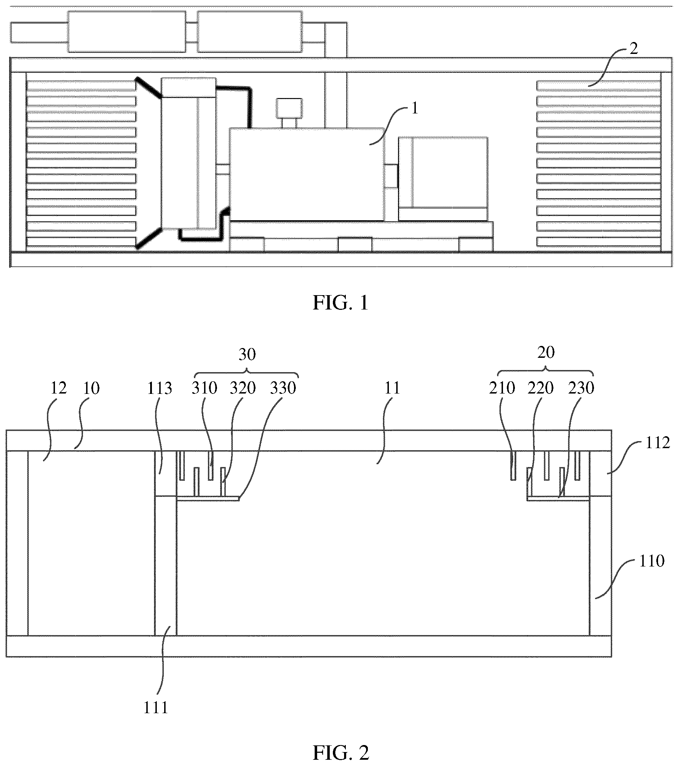

Referring to FIG. 1, when a diesel engine 1 produces electricity (a high-power diesel engine is usually used), to rapidly dissipate heat, relatively large openings need to be disposed on two sides of a housing for installing the diesel engine 1, and sound absorption structures 2 need to be disposed at the openings. However, the relatively large opening also provides a better channel for noise generated by the diesel engine 1. Even if the sound absorption structure 2 is disposed at the opening, the noise cannot be effectively absorbed, causing environmental noise pollution.

In view of this, the embodiments of this application provide a noise reduction apparatus, to effectively absorb noise generated by a diesel engine, thereby alleviating environmental noise pollution caused by the diesel engine during operation.

To make the objectives, technical solutions, and advantages of this application clearer, the noise reduction apparatus provided in this application is further described below in detail with reference to the accompanying drawings and specific embodiments.

Terms used in the following embodiments are merely intended to describe specific embodiments, but are not intended to limit this application. The terms "one", "a", "the", "the foregoing", and "this" of singular forms used in this specification and the appended claims of this application are also intended to include plural forms, unless otherwise specified in the context clearly.

Reference to "an embodiment", "some embodiments", or the like described in this specification indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment, instead, they mean "one or more but not all of the embodiments", unless otherwise specifically emphasized. The terms "include", "have", and their variants all mean "include but are not limited to", unless otherwise specifically emphasized.

In an embodiment of the noise reduction apparatus provided in this application, referring to FIG. 2, the noise reduction apparatus includes a housing 10, a first baffle component 20, and a second baffle component 30. The housing 10 includes a first installation room 11 configured to install diesel generating equipment, the first installation room 11 has a top plate, a bottom plate, and a first side plate 110 and a second side plate 111 that are oppositely disposed, an air intake vent 112 is disposed on the first side plate 110, and an air exhaust vent 113 is disposed on the second side plate 111. A first serpentine channel is formed in the first baffle component 20, and the first serpentine channel is connected to the air intake vent 112. A second serpentine channel is formed in the second baffle component 30, and one end of the second serpentine channel is connected to the air exhaust vent 113.

According to the foregoing solution, when the diesel generating equipment operates, if a sound signal generated by the diesel generating equipment needs to be transmitted from the first installation room through the air intake vent 112 and the air exhaust vent 113, the sound signal needs to pass through the first serpentine channel connected to the air intake vent 112 and the second serpentine channel connected to the air exhaust vent 113. In this way, the sound signal generated by the diesel generating equipment is reflected for a plurality of times in a transmission process, and strength of the sound signal continuously decreases in a process of the plurality of times of reflection. Therefore, most sound signals generated by the diesel generating equipment have been absorbed before being transmitted through the air intake vent and the air exhaust vent, thereby reducing noise transmitted by the diesel generating equipment to an external environment.

It should be noted that, to reduce noise generated by the diesel generating equipment, a sound absorption layer may be further disposed on an inner wall of the first installation room. In addition, heat dissipation for the diesel generating equipment is mainly performed through water cooling.

In a specific solution, the first baffle component 20 may include a first plate group and a second plate group. The first plate group includes a plurality of first plate bodies 210, and the plurality of first plate bodies 210 are arranged in a first direction. The second plate group includes a plurality of second plate bodies 220, and the plurality of second plate bodies 220 are arranged in the first direction. The plurality of first plate bodies 210 and the plurality of second plate bodies 220 are disposed in a staggered manner, and projections of the first plate body 210 and the second plate body 220 on the first side plate 110 partially overlap, so that the first plate group and the second plate group are combined into an insertion finger structure, and the insertion finger structure constitutes the first serpentine channel. In this way, before being transmitted through the air intake vent 112, a sound signal generated by the diesel generating equipment needs to be reflected for a plurality of times in the first serpentine channel, to reduce strength of the sound signal, thereby reducing noise transmitted by the diesel generating equipment to the external environment of the first installation room 11.

In a specific solution, the second baffle component 30 may include a third plate group and a fourth plate group. The third plate group includes a plurality of third plate bodies 310, and the plurality of third plate bodies 310 are arranged in a second direction. The fourth plate group includes a plurality of fourth plate bodies 320, and the plurality of fourth plate bodies 320 are arranged in the second direction. The plurality of third plate bodies 310 and the plurality of fourth plate bodies 320 are disposed in a staggered manner, and projections of the third plate body 310 and the fourth plate body 320 on the second side plate 111 partially overlap, so that the third plate group and the fourth plate group are combined into an insertion finger structure, and the insertion finger structure constitutes the second serpentine channel. In this way, before being transmitted through the air exhaust vent 113, a sound signal generated by the diesel generating equipment needs to be reflected for a plurality of times in the second serpentine channel, to reduce strength of the sound signal, thereby reducing noise transmitted by the diesel generating equipment to the external environment of the first installation room 11.

In the foregoing solution, the first direction is perpendicular to the first side plate 110, and the second direction is perpendicular to the first side plate 110. In a direction from the bottom plate to the top plate of the first installation room 11, the air intake vent 112 is disposed in a specified area in a direction that is of the first side plate 110 and that is close to the top plate. The second plate group may further include a second connection plate 230 connected to the first side plate 110, the second connection plate 230 is parallel to the top plate, each second plate body 220 is parallel to the first side plate 110 and is located on a side that is of the second connection plate 230 and that faces the top plate, and each second plate body 220 is connected to the second connection plate 230. Each first plate body 210 in the first plate group is parallel to the first side plate 110, and the first plate body 210 is connected to the top plate. Therefore, the first serpentine channel is formed between the first plate body 210, the second plate body 220, the second connection plate 230, and the top plate. Correspondingly, the air exhaust vent 113 may be located in a specified area in a direction that is of the second side plate 111 and that is close to the top plate. The fourth plate group may further include a fourth connection plate 330 connected to the second side plate 111, the fourth connection plate 330 may be parallel to the top plate, each fourth plate body 320 is parallel to the second side plate 111, and each fourth plate body 320 is connected to the fourth connection plate 330. Each third plate body 310 is parallel to the second side plate 111, and each third plate body 310 is connected to the top plate. Therefore, the second serpentine channel is formed between the third plate body 310, the top plate, the fourth plate body 320, and the fourth connection plate 330.

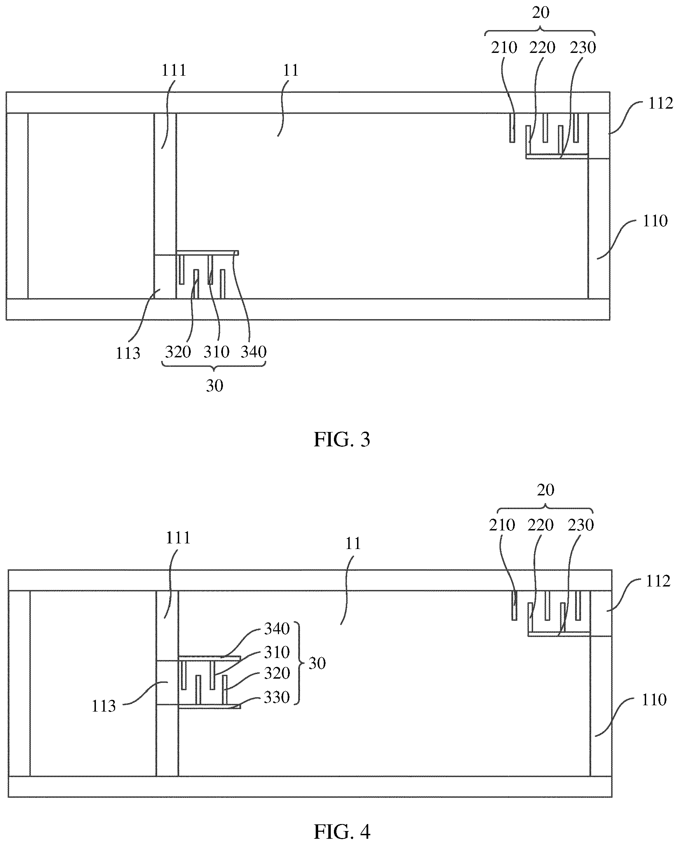

In a specific solution, referring to FIG. 3, the first direction is perpendicular to the first side plate 110, and the second direction is perpendicular to the first side plate 110. In a direction from the bottom plate to the top plate of the first installation room 11, the air intake vent 112 is disposed in a specified area in a direction that is of the first side plate 110 and that is close to the top plate. The second plate group in the first baffle component 20 may further include a second connection plate 230 connected to the first side plate 110, the second connection plate 230 is parallel to the top plate, each second plate body 220 is parallel to the first side plate 110 and is located on a side that is of the second connection plate 230 and that faces the top plate, and each second plate body 220 is connected to the second connection plate 230. Each first plate body 210 in the first plate group is parallel to the first side plate 110, and the first plate body 210 is connected to the top plate. Therefore, the first serpentine channel is formed between the first plate body 210, the second plate body 220, the second connection plate 230, and the top plate. Correspondingly, the air exhaust vent 113 may be located in a specified area in a direction that is of the second side plate 111 and that is close to the bottom plate. The third plate group in the second baffle component 30 may further include a third connection plate 340 connected to the second side plate 111, the third connection plate 340 is parallel to the bottom plate, each third plate body 310 is parallel to the second side plate 111, each third plate body 310 is located on a side that is of the third connection plate 340 and that faces the bottom plate, and each third plate body 310 is connected to the third connection plate 340. Each fourth plate body 320 is parallel to the second side plate 111, and the fourth plate body 320 is connected to the bottom plate. Therefore, the second serpentine channel is formed between the third connection plate 340, the third plate body 310, the fourth plate body 320, and the bottom plate.

In a specific solution, referring to FIG. 4, the first direction is perpendicular to the first side plate 110, and the second direction is perpendicular to the first side plate 110. In a direction from the bottom plate to the top plate of the first installation room 11, the air intake vent 112 is disposed in a specified area in a direction that is of the first side plate 110 and that is close to the top plate. The second plate group may further include a second connection plate 230 connected to the first side plate 110, the second connection plate 230 is parallel to the top plate, each second plate body 220 is parallel to the first side plate 110 and is located on a side that is of the second connection plate 230 and that faces the top plate, and each second plate body 220 is connected to the second connection plate 230. Each first plate body 210 in the first plate group is parallel to the first side plate 110, and the first plate body 210 is connected to the top plate. Therefore, the first serpentine channel is formed between the first plate body 210, the second plate body 220, the second connection plate 230, and the top plate. Correspondingly, the air exhaust vent 113 may be located in a middle area of the second side plate 111. In the second baffle component 30, the third plate group further includes a third connection plate 340 and the fourth plate group further includes a fourth connection plate 330. One end of the third connection plate 340 and one end of the fourth connection plate 330 are both connected to the second side plate 111, the third connection plate 340 is parallel to the bottom plate, and the fourth connection plate 330 is parallel to the top plate. Each third plate body 310 is parallel to the second side plate 111 and is located on a side that is of the third connection plate 340 and that faces the bottom plate, and each third plate body 310 is connected to the third connection plate 340. Each fourth plate body 320 is parallel to the second side plate 111 and is located on a side that is of the fourth connection plate 330 and that faces the third connection plate 340, and a side that is of each fourth plate body 320 and that is away from the third connection plate 340 is connected to the fourth connection plate 330. Therefore, the second serpentine channel is formed between the third plate body 310, the fourth plate body 320, the third connection plate 340, and the fourth connection plate 330.

It should be noted that the third connection plate 340 and the fourth connection plate 330 may be disposed in parallel.

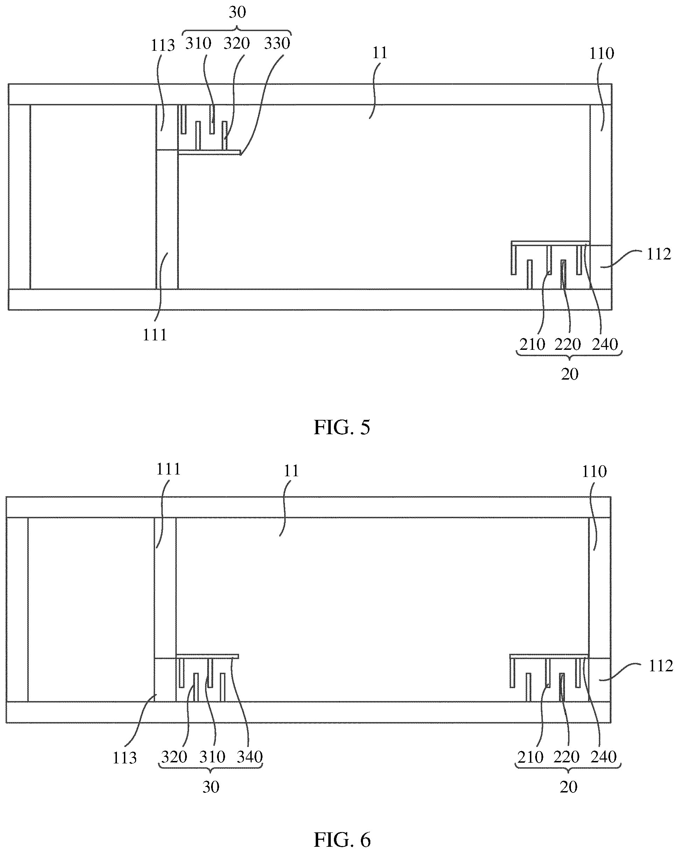

In a specific solution, referring to FIG. 5, the first direction is perpendicular to the first side plate 110, and the second direction is perpendicular to the first side plate 110. In a direction from the bottom plate to the top plate of the first installation room 11, when the air intake vent 112 is located in a specified area in a direction that is of the first side plate 110 and that is close to the bottom plate, the first plate group in the first baffle component 20 further includes a first connection plate 240 connected to the first side plate 110, the first connection plate 240 is parallel to the bottom plate, each first plate body 210 is parallel to the first side plate 110 and is located on a side that is of the first connection plate 240 and that faces the bottom plate, and each first plate body 210 is connected to the first connection plate 240. Each second plate body 220 in the second plate group is parallel to the first side plate 110, and each second plate body 220 is connected to the bottom plate. Therefore, the first serpentine channel is surrounded with the first connection plate 240, the first plate body 210, the second plate body 220, and the bottom plate. Correspondingly, the air exhaust vent 113 may be located in a specified area in a direction that is of the second side plate 111 and that is close to the top plate. The fourth plate group may further include a fourth connection plate 330 connected to the second side plate 111, the fourth connection plate 330 may be parallel to the top plate, each fourth plate body 320 is parallel to the second side plate 111, and each fourth plate body 320 is connected to the fourth connection plate 330. Each third plate body 310 is parallel to the second side plate 111, and each third plate body 310 is connected to the top plate. Therefore, the second serpentine channel is formed between the third plate body 310, the top plate, the fourth plate body 320, and the fourth connection plate 330.

In a specific solution, referring to FIG. 6, the first direction is perpendicular to the first side plate 110, and the second direction is perpendicular to the first side plate 110. In a direction from the bottom plate to the top plate of the first installation room 11, when the air intake vent 112 is located in a specified area in a direction that is of the first side plate 110 and that is close to the bottom plate, the first plate group in the first baffle component 20 further includes a first connection plate 240 connected to the first side plate 110, the first connection plate 240 is parallel to the bottom plate, each first plate body 210 is parallel to the first side plate 110 and is located on a side that is of the first connection plate 240 and that faces the bottom plate, and each first plate body 210 is connected to the first connection plate 240. Each second plate body 220 in the second plate group is parallel to the first side plate 110, and each second plate body 220 is connected to the bottom plate. Therefore, the first serpentine channel is surrounded with the first connection plate 240, the first plate body 210, the second plate body 220, and the bottom plate. Correspondingly, the air exhaust vent 113 may be located in a specified area in a direction that is of the second side plate 111 and that is close to the bottom plate. The third plate group in the second baffle component 30 may further include a third connection plate 340 connected to the second side plate 111, the third connection plate 340 is parallel to the bottom plate, each third plate body 310 is parallel to the second side plate 111, each third plate body 310 is located on a side that is of the third connection plate 340 and that faces the bottom plate, and each third plate body 310 is connected to the third connection plate 340. Each fourth plate body 320 is parallel to the second side plate 111, and each fourth plate body 320 is connected to the bottom plate. Therefore, the second serpentine channel is formed between the third connection plate 340, the third plate body 310, the fourth plate body 320, and the bottom plate.

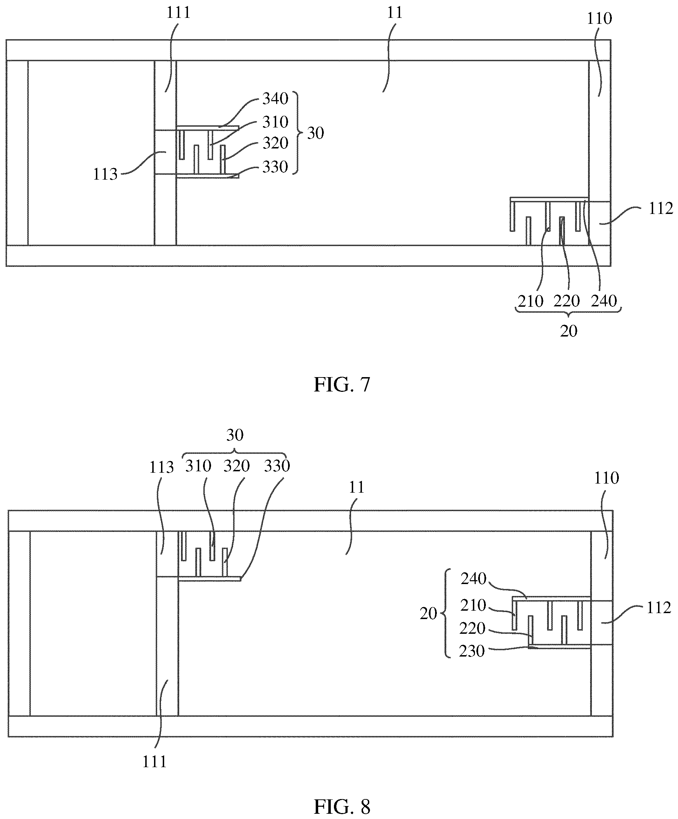

In a specific solution, referring to FIG. 7, the first direction is perpendicular to the first side plate 110, and the second direction is perpendicular to the first side plate 110. In a direction from the bottom plate to the top plate of the first installation room 11, when the air intake vent 112 is located in a specified area in a direction that is of the first side plate 110 and that is close to the bottom plate, the first plate group in the first baffle component 20 further includes a first connection plate 240 connected to the first side plate 110, the first connection plate 240 is parallel to the bottom plate, each first plate body 210 is parallel to the first side plate 110 and is located on a side that is of the first connection plate 240 and that faces the bottom plate, and each first plate body 210 is connected to the first connection plate 240. Each second plate body 220 in the second plate group is parallel to the first side plate 110, and each second plate body 220 is connected to the bottom plate. Therefore, the first serpentine channel is surrounded with the first connection plate 240, the first plate body 210, the second plate body 220, and the bottom plate. Correspondingly, the air exhaust vent 113 may be located in a middle area of the second side plate 111. In the second baffle component 30, the third plate group further includes a third connection plate 340 and the fourth plate group further includes a fourth connection plate 330. One end of the third connection plate 340 and one end of the fourth connection plate 330 are both connected to the second side plate 111, the third connection plate 340 is parallel to the bottom plate, and the fourth connection plate 330 is parallel to the top plate. Each third plate body 310 is parallel to the second side plate 111 and is located on a side that is of the third connection plate 340 and that faces the bottom plate, and each third plate body 310 is connected to the third connection plate 340. Each fourth plate body 320 is parallel to the second side plate 111 and is located on a side that is of the fourth connection plate 330 and that faces the third connection plate 340, and a side that is of each fourth plate body 320 and that is away from the third connection plate 340 is connected to the fourth connection plate 330. Therefore, the second serpentine channel is formed between the third plate body 310, the fourth plate body 320, the third connection plate 340, and the fourth connection plate 330.

In a specific solution, referring to FIG. 8, the first direction is perpendicular to the first side plate 110, and the second direction is perpendicular to the first side plate 110. In a direction from the bottom plate to the top plate of the first installation room 11, when the air intake vent 112 is located in a middle area of the first side plate 110, the first plate group in the first baffle component 20 further includes a first connection plate 240 connected to the first side plate 110, the first connection plate 240 is parallel to the bottom plate, each first plate body 210 is parallel to the first side plate 110 and is located on a side that is of the first connection plate 240 and that faces the bottom plate, and each first plate body 210 is connected to the first connection plate 240. The second plate group further includes a second connection plate 230 connected to the first side plate 110, the second connection plate 230 is parallel to the top plate, the second plate body 220 is parallel to the first side plate 110 and is located on a side that is of the second connection plate 230 and that faces the first connection plate 240, and a side that is of each second plate body 220 and that is away from the first connection plate 240 is connected to the second connection plate 230. Therefore, the first serpentine channel is formed between the first connection plate 240, the second connection plate 230, the first side plate 110, and the second side plate 111. Correspondingly, the air exhaust vent 113 may be located in a specified area in a direction that is of the second side plate 111 and that is close to the top plate. The fourth plate group may further include a fourth connection plate 330 connected to the second side plate 111, the fourth connection plate 330 may be parallel to the top plate, each fourth plate body 320 is parallel to the second side plate 111, and each fourth plate body 320 is connected to the fourth connection plate. Each third plate body 310 is parallel to the second side plate 111, and each third plate body 310 is connected to the top plate. Therefore, the second serpentine channel is formed between the third plate body 310, the top plate, the fourth plate body 320, and the fourth connection plate 330.

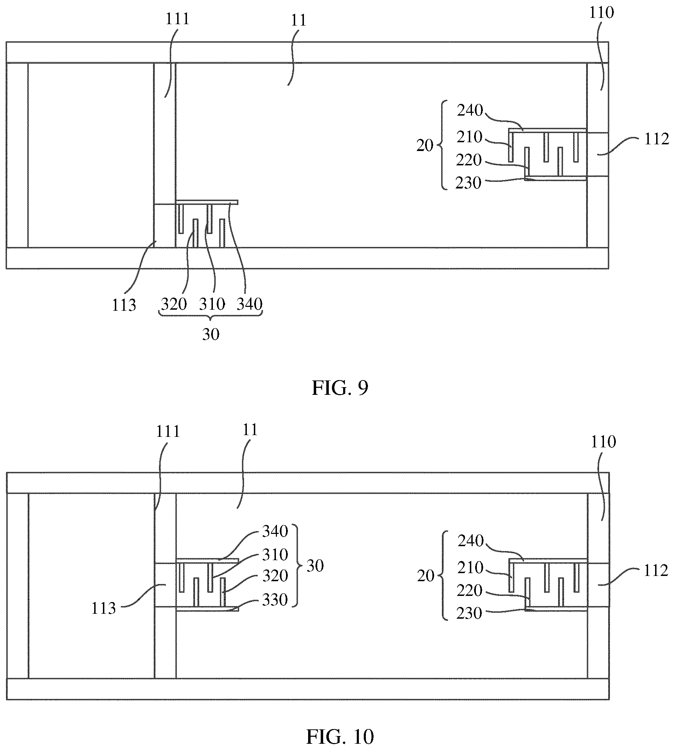

In a specific solution, referring to FIG. 9, the first direction is perpendicular to the first side plate 110, and the second direction is perpendicular to the first side plate 110. In a direction from the bottom plate to the top plate of the first installation room 11, when the air intake vent 112 is located in a middle area of the first side plate 110, the first plate group in the first baffle component 20 further includes a first connection plate 240 connected to the first side plate 110, the first connection plate 240 is parallel to the bottom plate, each first plate body 210 is parallel to the first side plate 110 and is located on a side that is of the first connection plate 240 and that faces the bottom plate, and each first plate body 210 is connected to the first connection plate. The second plate group further includes a second connection plate 230 connected to the first side plate 110, the second connection plate 230 is parallel to the top plate, the second plate body 220 is parallel to the first side plate 110 and is located on a side that is of the second connection plate 230 and that faces the first connection plate 240, and a side that is of each second plate body 220 and that is away from the first connection plate 240 is connected to the second connection plate 230. Therefore, the first serpentine channel is formed between the first connection plate 240, the second connection plate 230, the first side plate 110, and the second side plate 111. Correspondingly, the air exhaust vent 113 may be located in a specified area in a direction that is of the second side plate 111 and that is close to the bottom plate. The third plate group in the second baffle component 30 may further include a third connection plate 340 connected to the second side plate 111, the third connection plate 340 is parallel to the bottom plate, each third plate body 310 is parallel to the second side plate 111, each third plate body 310 is located on a side that is of the third connection plate 340 and that faces the bottom plate, and each third plate body 310 is connected to the third connection plate 340. Each fourth plate body 320 is parallel to the second side plate 111, and the fourth plate body 320 is connected to the bottom plate. Therefore, the second serpentine channel is formed between the third connection plate 340, the third plate body 310, the fourth plate body 320, and the bottom plate.

In a specific solution, referring to FIG. 10, the first direction is perpendicular to the first side plate 110, and the second direction is perpendicular to the first side plate 110. In a direction from the bottom plate to the top plate of the first installation room 11, when the air intake vent 112 is located in a middle area of the first side plate 110, the first plate group in the first baffle component 20 further includes a first connection plate 240 connected to the first side plate 110, the first connection plate 240 is parallel to the bottom plate, each first plate body 210 is parallel to the first side plate 110 and is located on a side that is of the first connection plate 240 and that faces the bottom plate, and each first plate body 210 is connected to the first connection plate. The second plate group further includes a second connection plate 230 connected to the first side plate 110, the second connection plate 230 is parallel to the top plate, the second plate body 220 is parallel to the first side plate 110 and is located on a side that is of the second connection plate 230 and that faces the first connection plate 240, and each second plate body 220 is connected to the second connection plate 230. Therefore, the first serpentine channel is formed between the first connection plate 240, the second connection plate 230, the first side plate 110, and the second side plate 111. Correspondingly, the air exhaust vent 113 may be located in a middle area of the second side plate 111. In the second baffle component 30, the third plate group further includes a third connection plate 340 and the fourth plate group further includes a fourth connection plate 330. One end of the third connection plate 340 and one end of the fourth connection plate 330 are both connected to the second side plate 111, the third connection plate 340 is parallel to the bottom plate, and the fourth connection plate 330 is parallel to the top plate. Each third plate body 310 is parallel to the second side plate 111 and is located on a side that is of the third connection plate 340 and that faces the bottom plate, and each third plate body 310 is connected to the third connection plate 340. Each fourth plate body 320 is parallel to the second side plate 111 and is located on a side that is of the fourth connection plate 330 and that faces the third connection plate 340, and a side that is of each fourth plate body 320 and that is away from the third connection plate 340 is connected to the fourth connection plate 330. Therefore, the second serpentine channel is formed between the third plate body 310, the fourth plate body 320, the third connection plate 340, and the fourth connection plate 330.

It should be noted that the third connection plate 340 and the fourth connection plate 330 may be disposed in parallel.

In a specific solution, referring to FIG. 2, the housing 10 may further include a second installation room 12, the second installation room 12 is disposed side by side with the first installation room 11, the second installation room 12 is connected to the air exhaust vent 113 of the first installation room 11, and the second installation room 12 may be configured to install a heat dissipation component that dissipates heat for the diesel generating equipment.

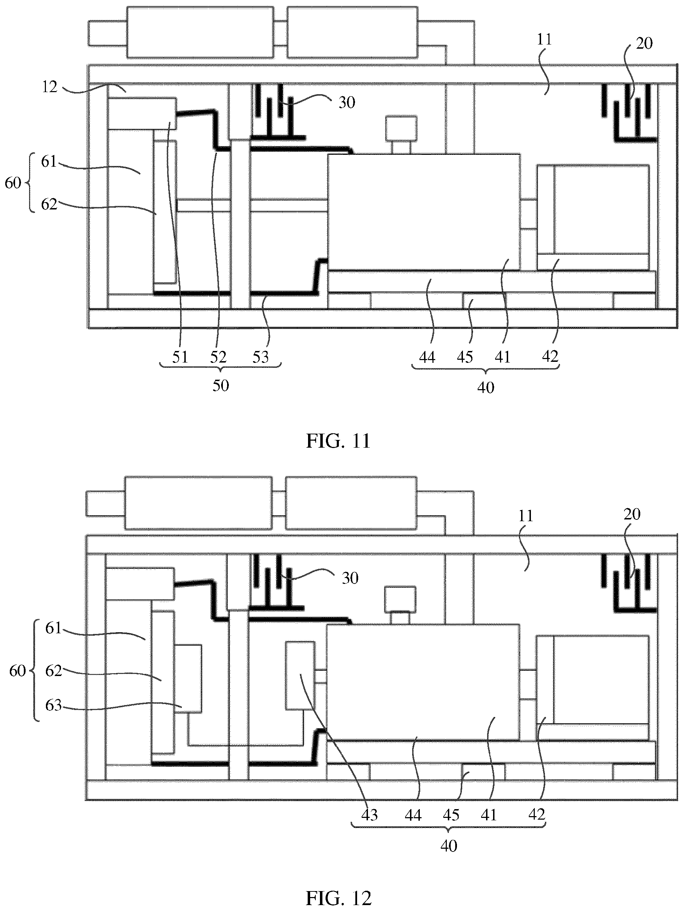

In addition, referring to FIG. 11, this application further provides a generator assembly. The generator assembly includes diesel generating equipment 40, a cooling device 50, and the noise reduction apparatus in the foregoing technical solutions. The cooling device 50 is connected to a liquid cooler of the diesel generating equipment 40 and is configured to cool and dissipate heat for the diesel generating equipment 40. The diesel generating equipment 40 is installed in the first installation room 11 of the noise reduction apparatus. Because the first baffle component 20 and the second baffle component 30 are disposed in the first installation room 11, when a sound signal needs to be transmitted to the external environment of the first installation room 11, the sound signal can reach the air intake vent and the air exhaust vent only after passing through the first serpentine channel and the second serpentine channel. In a process of passing through the first serpentine channel and the second serpentine channel, the sound signal is reflected for a plurality of times, and in a process of the plurality of times of reflection, strength of the sound signal continuously decreases, so that a relatively weak sound signal is transmitted to the external environment. Therefore, the diesel generating equipment 40 in the generator assembly externally transmits less noise in an operation process. In addition, the cooling device 50 can cool the diesel generating equipment 40.

In a specific solution, the generator assembly may further include a heat dissipation component 60, the heat dissipation component 60 is disposed in the second installation room 12, and the heat dissipation component 60 may be connected to the cooling device 50, so that the diesel generating equipment 40 operates at a specified temperature. Specifically, the cooling device 50 may include a water tank 51, a water return pipe 53, and a water outlet pipe 52, and the heat dissipation component 60 may include a heat sink 61 and a heat dissipation blower 62. The water tank 51 may be disposed in the first installation room 11 or may be disposed in the second installation room 12. One end of the water outlet pipe 52 is connected to a water outlet port of the water tank 51, and the other end of the water outlet pipe 52 is connected to a water inlet port of the liquid cooler of the diesel generating equipment 40. One end of the water return pipe 53 is connected to a water outlet port of the liquid cooler of the diesel generating equipment 40, the other end of the water return pipe 53 is connected to the heat sink 61, and the heat sink 61 is connected to a water return port of the water sink. In this way, heat generated by the diesel generating equipment 40 in an electricity producing process can be taken away through the water return pipe 53, and before entering the water tank 51, water in the water return pipe 53 needs to pass through the heat sink 61 to dissipate heat. To accelerate heat dissipation of the heat sink 61, the heat dissipation blower 62 is disposed between the heat sink 61 and a second side wall of the first installation room 11.

In the foregoing solution, the diesel generating equipment 40 may include a diesel engine 41 and a first generator 42, and the diesel engine 41 is a dual output shaft engine. The diesel engine 41 and the first generator 42 are both disposed in the first installation room 11, one output shaft of the diesel engine 41 is connected to the first generator 42, and the other transport shaft of the diesel engine 41 is penetrated through the second side wall to be connected to the heat dissipation blower 62. Because the first baffle component 20 and the second baffle component 30 are respectively disposed at the air intake vent and the air exhaust vent of the first installation room 11, the first installation room 11 can be formed as relatively closed space. When the diesel engine 41 operates, a sound signal generated by the diesel engine 41 is reflected for a plurality of times in a process of being transmitted to the air intake vent and the air exhaust vent, thereby reducing noise transmitted by the diesel engine to the external environment.

In a specific solution, referring to FIG. 12, the diesel generating equipment 40 may include a diesel engine 41, a first generator 42, and a second generator 43. The diesel engine 41, the first generator 42, and the second generator 43 are all disposed in the first installation room 11, and two output shafts of the diesel engine 41 are respectively connected to the first generator 42 and the second generator 43. The heat dissipation component 60 includes a heat sink 61, a heat dissipation blower 62, and a motor 63. The motor 63 is connected to the second generator 43, and the motor 63 is configured to drive the heat dissipation blower 62 to operate. When the generator assembly operates, the diesel engine 41 starts, to drive the second generator 43 to provide power for the motor 63. In addition, because the first baffle component 20 and the second baffle component 30 are respectively disposed at the air intake vent and the air exhaust vent of the first installation room 11, the first installation room 11 can be formed as relatively closed space. When the diesel engine 41 operates, a sound signal generated by the diesel engine 41 is reflected for a plurality of times in a process of being transmitted to the air intake vent and the air exhaust vent, thereby reducing noise transmitted by the diesel engine 41 to the external environment.

It should be noted that the heat dissipation blower 62 may be a heat dissipation fan, and the heat dissipation blower is driven by using the motor 63, so that output power of the heat dissipation fan can be adjusted, to alleviate power waste of the heat dissipation fan, thereby improving efficiency of the diesel generating equipment.

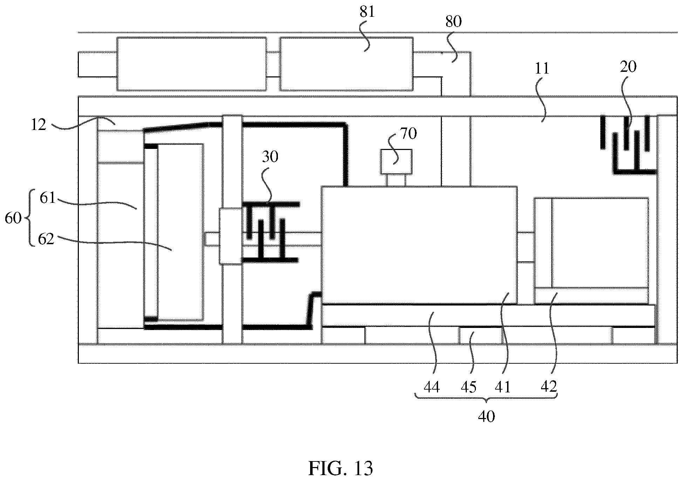

In a specific solution, referring to FIG. 13, the heat dissipation blower 62 may be a centrifugal blower. The centrifugal blower is disposed on a side that is of the second installation room 12 and that is close to the first installation room 11, and the centrifugal blower is connected to the air exhaust vent. In this case, the diesel generating equipment 40 may include a diesel engine 41 and a first generator 42, and the diesel engine 41 is a dual output shaft engine. The diesel engine 41 and the first generator 42 are both disposed in the first installation room 11, one output shaft of the diesel engine 41 is connected to the first generator 42, and the other output shaft of the diesel engine 41 is penetrated through the air exhaust vent on the second side wall to be connected to the centrifugal blower, to drive the centrifugal blower to operate. When the generator assembly operates, the diesel engine 41 starts, to drive the centrifugal blower to operate. In this manner, the heat sink 61 is more conveniently cleaned, and heat dissipation efficiency of the diesel engine 41 can be further improved. In addition, because the first baffle component 20 and the second baffle component 30 are respectively disposed at the air intake vent and the air exhaust vent of the first installation room 11, the first installation room 11 can be formed as relatively closed space. When the diesel engine 41 operates, a sound signal generated by the diesel engine 41 is reflected for a plurality of times in a process of being transmitted to the air intake vent and the air exhaust vent, thereby reducing noise transmitted by the diesel engine 41 to the external environment.

It should be noted that, referring to FIG. 11 to FIG. 13, the generator assembly may further include an air intake vent 70 that is disposed on the diesel engine 41 and that provides oxygen for the diesel engine 41, a smoke exhaust pipe 80 that is disposed on the diesel engine 41 and that is configured to exhaust smoke, and a vibration damping component that is disposed in the first installation room 11 and that is configured to bear the diesel engine 41. Specifically, the vibration damping component may include an installation plate 44 and a plurality of springs 45, the plurality of springs 45 are disposed on a side that is of the installation plate 44 and that faces the bottom plate of the first installation room 11, and the diesel engine 41 is installed on a side that of the installation plate and that is opposite to the bottom plate of the first installation room 11, to damp vibration of the diesel engine 41 during operation. In addition, the spring 45 may also be replaced with an elastic gasket or rubber. In addition, an intake silencer 81 may be disposed in the smoke exhaust pipe 80, to reduce noise generated during smoke exhaust.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A noise reduction apparatus, comprising:
a housing, wherein the housing comprises a first installation room configured to install diesel generating equipment, the first installation room has a top plate, a bottom plate, and a first side plate and a second side plate that are oppositely disposed, an air intake vent is disposed on the first side plate, and an air exhaust vent is disposed on the second side plate;
a first baffle component, wherein a first serpentine channel is formed in the first baffle component, and one end of the first serpentine channel is connected to the air intake vent; and
a second baffle component, wherein a second serpentine channel is formed in the second baffle component, and one end of the second serpentine channel is connected to the air exhaust vent.

2. The noise reduction apparatus according to claim 1, wherein the first baffle component comprises a first plate group and a second plate group; and
the first plate group comprises a plurality of first plate bodies arranged in a first direction, the second plate group comprises a plurality of second plate bodies arranged in the first direction, and the first plate bodies and the second plate bodies are disposed in a staggered manner, so that the first plate group and the second plate group are combined into an insertion finger structure, and the insertion finger structure constitutes the first serpentine channel.

3. The noise reduction apparatus according to claim 1, wherein the second baffle component comprises a third plate group and a fourth plate group; and
the third plate group comprises a plurality of third plate bodies arranged in a second direction, the fourth plate group comprises a plurality of fourth plate bodies arranged in the second direction, and the third plate bodies and the fourth plate bodies are disposed in a staggered manner, so that the third plate group and the fourth plate group are combined into an insertion finger structure, and the insertion finger structure constitutes the second serpentine channel.

4. The noise reduction apparatus according to claim 2, wherein the first direction is perpendicular to the first side plate;
the air intake vent is disposed in a specified area on a side that is of the first side plate and that is close to the top plate;
each first plate body is parallel to the first side plate, and each first plate body is connected to the top plate; and the second plate group further comprises a second connection plate, the second connection plate is connected to the first side plate, the second connection plate is parallel to the top plate, each second plate body is parallel to the first side plate and is located on a side that is of the second connection plate and that faces the top plate, and each second plate body is connected to the second connection plate.

5. The noise reduction apparatus according to claim 2, wherein the first direction is perpendicular to the first side plate;
the air intake vent is disposed in a specified area on a side that is of the first side plate and that is close to the bottom plate;
the first plate group further comprises a first connection plate, the first connection plate is connected to the first side plate, the first connection plate is parallel to the bottom plate, each first plate body is parallel to the first side plate and is located on a side that is of the first connection plate and that faces the bottom plate, and each first plate body is connected to the first connection plate; and
each second plate body is parallel to the first side plate, and each second plate body is connected to the bottom plate.

6. The noise reduction apparatus according to claim 2, wherein the first direction is perpendicular to the first side plate;
the air intake vent is disposed in a middle area of the first side plate;
the first plate group further comprises a first connection plate, the first connection plate is connected to the first side plate, the first connection plate is parallel to the bottom plate, each first plate body is parallel to the first side plate and is located on a side that is of the first connection plate and that faces the bottom plate, and each first plate body is connected to the first connection plate; and
the second plate group further comprises a second connection plate, the second connection plate is connected to the first side plate, the second connection plate is parallel to the top plate, each second plate body is parallel to the first side plate and is located on a side that is of the second connection plate and that faces the first connection plate, and each second plate body is connected to the second connection plate.

7. The noise reduction apparatus according to claim 3, wherein the second direction is perpendicular to the first side plate;
the air exhaust vent is disposed in a specified area on a side that is of the second side plate and that is close to the top plate;
each third plate body is parallel to the second side plate, and each third plate body is connected to the top plate; and
the fourth plate group further comprises a fourth connection plate, the fourth connection plate is connected to the second side plate, the fourth connection plate is parallel to the top plate, each fourth plate body is parallel to the second side plate and is located on a side that is of the fourth connection plate and that faces the top plate, and each fourth plate body is connected to the fourth connection plate.

8. The noise reduction apparatus according to claim 3, wherein the second direction is perpendicular to the first side plate;
the air exhaust vent is disposed in a specified area on a side that is of the second side plate and that is close to the bottom plate;
each fourth plate body is parallel to the second side plate, and each fourth plate body is connected to the bottom plate; and
the third plate group further comprises a third connection plate, the third connection plate is connected to the second side plate, the third connection plate is parallel to the bottom plate, each third plate body is parallel to the second side plate and is located on a side that is of the third connection plate and that faces the bottom plate, and each third plate body is connected to the third connection plate.

9. The noise reduction apparatus according to claim 3, wherein the second direction is perpendicular to the first side plate;
the air exhaust vent is disposed in a middle area of the second side plate;
the third plate group further comprises a third connection plate, the third connection plate is parallel to the bottom plate, the third connection plate is connected to the second side plate, each third plate body is parallel to the second side plate and is located on a side that is of the third connection plate and that faces the bottom plate, and each third plate body is connected to the third connection plate; and
the fourth plate group further comprises a fourth connection plate, the fourth connection plate is connected to the second side plate, the fourth connection plate is parallel to the top plate, each fourth plate body is parallel to the second side plate and is located on a side that is of the fourth connection plate and that faces the third connection plate, and each fourth plate body is connected to the fourth connection plate.

10. The noise reduction apparatus according to any one of claims 1 to 9, wherein the housing further comprises a second installation room, the second installation room is located on a side that is of the second side plate and that is away from the first side plate, and the second installation room is disposed side by side with the first installation room and is connected to the first installation room through the air exhaust vent.

11. The noise reduction apparatus according to any one of claims 1 to 9, wherein a sound absorption layer is disposed on an inner wall of the first installation room.

12. A generator assembly, comprising diesel generating equipment and a cooling device, wherein the cooling device is connected to a liquid cooler of the diesel generating equipment and is configured to cool and dissipate heat for the diesel generating equipment; and further comprising the noise reduction apparatus according to any one of claims 1 to 11, wherein the diesel generating equipment is installed in the first installation room.

13. The generator assembly according to claim 12, wherein the cooling device comprises a water tank, a water outlet pipe, and a water return pipe, wherein
one end of the water outlet pipe is connected to a water outlet port of the water tank, and the other end of the water outlet pipe is connected to a water inlet port of the liquid cooler of the diesel generating equipment; and
one end of the water return pipe is connected to a water outlet port of the liquid cooler of the diesel generating equipment, and the other end of the water return pipe is connected to a water return port of the water tank.

14. The generator assembly according to claim 13, wherein when the noise reduction apparatus comprises a second installation room, the water tank is disposed in the first installation room or is disposed in the second installation room.

15. The generator assembly according to claim 14, further comprising a heat dissipation component, wherein the heat dissipation component is disposed in the second installation room;
the heat dissipation component comprises a heat sink and a heat dissipation blower;
one end of the heat sink is connected to the water return port of the water tank, and the other end of the heat sink is connected to the water return pipe; and
the heat dissipation blower is disposed between the heat sink and the second side plate.
